# EUROPEAN PATENT APPLICATION

(11) **EP 3 900 663 A1**
(43) Date of publication of application: **27.10.2021**
(21) Application number: 21169785.9
(22) Date of filing: 22.04.2021
(51) Int. Cl.: A61C 5/64

(54) **MIXING AND DISPENSING CONTAINER**

(30) Priority: 23.04.2020 AU 2020901279; 09.03.2021 AU 2021900666
(71) Applicant: Sdi Limited, Bayswater, VIC 3153 (AU)
(72) Inventor: CHEETHAM, Joshua James, 3181 Windsor, Victoria (AU)
(74) Representative: Bianchetti & Minoja SRL

(57) **Abstract**

The invention relates to a mixing and dispensing container for mixing and dispensing dental materials. The mixing and dispensing container comprises a plunger; an open-ended liquid receptacle adapted to receive the plunger; and a main body with a proximal end, a distal end, a chamber open at the proximal end and an aperture in the distal end. The chamber is adapted to receive the liquid receptacle. The dental capsule mixes various components of the dental materials and forms a dental paste for dispensing. The container is especially envisaged for use in mixing of components to provide a paste for dental use.

## Description

### FIELD OF THE INVENTION

The present invention relates to a mixing and dispensing container.

### BACKGROUND

In dentistry it is a common need to use compounds for procedures such as polishing, medicinal treatment, repairs and modifications. Dental compounds are often a mixture of components that form a paste and harden.

Known delivery mechanisms for this paste include mixing the components of a single liquid and a single powder and applying the paste via a swab or syringe. This process can be time-consuming and awkward, especially if the mixture is quick to set.

Dental compounds as above are difficult to perfectly and reproducibly mix, and prepare at a precise dosage. Some known mechanisms for mixing dental compounds are also susceptible to contaminating the dental compounds with foreign matter, and can be messy, affecting the hygiene of the preparation area.

Dental compounds are typically used in small quantities with small amounts of components. As such, conventional mixing means regularly have difficulty with uniform mixing, often forming lumps in the mixture making the application of the compound difficult. Furthermore, only a fraction of the mixed compound can be removed from the mixing location and applied to a treatment area with a significant percentage left as waste stuck to surfaces in the mixing area. Wastage of such material is costly and undesired.

Known capsules that contain only one liquid and one powder have very limited chemistries. For example, initiators for the liquid need to be contained in the powder which may not be practical. Furthermore, if two different initiators are needed for a liquid, these may not be able to be stored together in the powder component and thus the capsule may not be suitable.

The present invention attempts to overcome at least in part the aforementioned disadvantages of previous mixture delivery means.

### SUMMARY OF THE INVENTION

In accordance with one aspect of the present invention there is provided a mixing and dispensing container for mixing and dispensing dental materials comprising:
a plunger;
an open-ended liquid receptacle adapted to receive the plunger; and
a main body with a proximal end, a distal end, a chamber open at the proximal end and an aperture in the distal end;
wherein the chamber is adapted to receive the liquid receptacle; and
wherein the dental capsule mixes various components of the dental materials and forms a dental paste for dispensing.

In a preferred embodiment, a liquid is housed within the liquid receptacle and a powder is housed within the chamber.

In a preferred embodiment, the liquid receptacle incorporates a centrally weakened portion.

In a preferred embodiment, the plunger has a forwardly projecting protrusion adapted to break the centrally weakened portion of the liquid receptacle. Preferably, the forwardly projecting protrusion achieves breakage through piercing.

In a preferred embodiment, the plunger is in engagement with the liquid receptacle such that upon the plunger being depressed liquid in the receptacle is pushed into the chamber.

In a preferred embodiment, further depression of the plunger results in a front portion of the liquid receptacle is broken away by depression of the plunger so as to push mixture of liquid and powder in the chamber through the aperture.

In a preferred embodiment, the dental capsule further comprises internal features that provide tactile feedback to an operator as to how far the plunger has been depressed, or how far the liquid receptacle has moved.

In a preferred embodiment, the dental capsule, or a portion thereof, is made from a transparent material allowing for an operator to view the mixing of liquids and/or powder, and/or how far the plunger has been depressed.

In a preferred embodiment, the dental capsule further comprises a nozzle connected to the aperture at the distal end of the main body.

In a preferred embodiment, the dental capsule further comprises, a frangible membrane covering the aperture at the distal end of the main body. More preferably, the frangible membrane which when broken provides access for an applicator device, such as a brush or swab, after mixing has been undertaken.

In a preferred embodiment, the chamber incorporates vent means for allowing entrapped air to escape from the mixed paste during extrusion.

In a preferred embodiment, the central weakened portion of the liquid receptacle has a thickness of less than 0.05 mm, and preferably less than 0.03mm.

In a preferred embodiment, the central weakened portion of the liquid receptacle is formed of a unitary sheet of material that is integral to the liquid receptacle moulded part.

In a preferred embodiment, the frangible membrane has a thickness of less than 0.02 mm.

In a preferred embodiment, the frangible membrane is formed of a unitary sheet of material.

In a preferred embodiment, the dental capsule further comprises, a seal means located on an external surface of the plunger.

### BRIEF DESCRIPTION OF DRAWINGS

The present invention will now be described, by way of example, with reference to the accompanying drawings, in which:
Figure 1 is a disassembled cross-sectional view of a mixing and dispensing container in accordance to an embodiment of the present invention.
Figure 2a is a cross-sectional view of the embodiment of the mixing and dispensing container depicted in Figure 1 in a first stage of use.
Figure 2b is a cross-sectional view of the embodiment of the mixing and dispensing container depicted in Figure 1 in a second stage of use.
Figure 2c is a cross-sectional view of the embodiment of the mixing and dispensing container depicted in Figure 1 in a third stage of use.
Figure 2d is a cross-sectional view of the embodiment of the mixing and dispensing container depicted in Figure 1 in a fourth stage of use.
Figure 3 is a perspective cross-sectional view of a body for a mixing and dispensing container in accordance to an embodiment of the present invention depicted in Figure 1.
Figure 4 is a cross-sectional view of a body for a mixing and dispensing container in accordance to an embodiment of the present invention depicted in Figure 1.
Figure 5 is a perspective cross-sectional view of a first alternative body for a mixing and dispensing container.
Figure 6 is a perspective cross-sectional view of a second alternative body for a mixing and dispensing container.
Figure 7 is a cross-sectional view of a second alternative body for a mixing and dispensing container.
Figure 8 is a collection of views of plungers in accordance to an alternative embodiment of the present invention with projections of various configurations.
Figure 9 is a pair of side views of plungers in accordance to an alternative embodiment of the present invention with projections of various configurations
Figure 10 is a perspective view of a plunger in accordance to an alternative embodiment of the present invention with an alternative projection
Figure 11 is a perspective view and top view of a plunger in accordance to an alternative embodiment of the present invention with an alternative projection.

### DESCRIPTION OF PREFERRED EMBODIMENTS

The present invention there is provides a mixing and dispensing container comprising:
a plunger;
an open-ended liquid receptacle adapted to receive the plunger; and
a main body with a proximal end, a distal end, a chamber open at the proximal end and an aperture in the distal end;
wherein the chamber is adapted to receive the liquid receptacle; and
wherein the dental capsule mixes various components of the dental materials and forms a dental paste for dispensing.

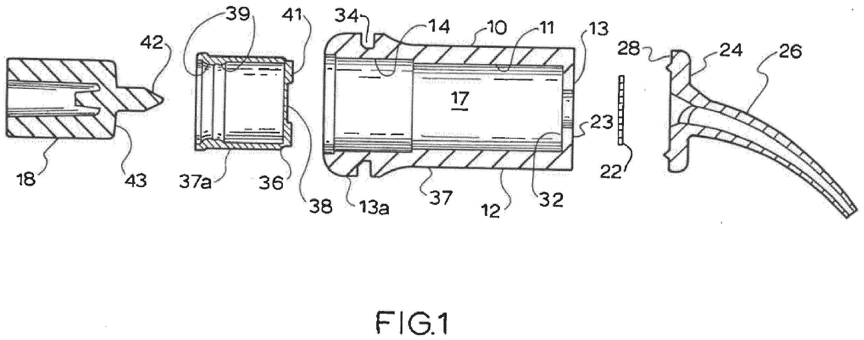

Referring to the **FIGS. 1 to 5** of the accompanying drawings there is shown a container that is particularly envisaged to be used for dispensing of a dental material, in which a front portion of a liquid receptacle may be entirely detached from the liquid receptacle.

In **FIG. 1****,** of the accompanying drawings there is shown a container **10** in an initial open or storage condition. The dental container **10** comprises a body **12** which has an internal surface **11** and is substantially cylindrical in cross section. Inside the body **12** is an open-ended liquid receptacle **14,** which is arranged to contain a liquid. The receptacle **14** is sealed by a plunger **18** such as by seal means located on an external surface of the plunger **18.**

The plunger **18** is initially located in an open end of the receptacle **14** and has a front face **41.**

Further, the front face **41** of the plunger **18** has extending therefrom a forwardly projecting protrusion **42.**

The body **12** contains a main chamber **17** which is arranged to house an amount of powder. The main chamber of the body **12** is sealed at a distal end **13** by a frangible membrane **22** which is connected to the body **12** by any convenient means such as an adhesive. The distal end **13** of the body **12** is opposed to a proximal end **13** *a* thereof. The body **12** has attached thereto an end cap **24** which is connected to a nozzle **26** for dispensing material.

The liquid receptacle **14** has a side wall **37** with an inner front portion **36** with a central weakened portion 38. The central weakened portion **38** is substantially thinner than the remainder of the front portion **36** of the liquid receptacle **14.**

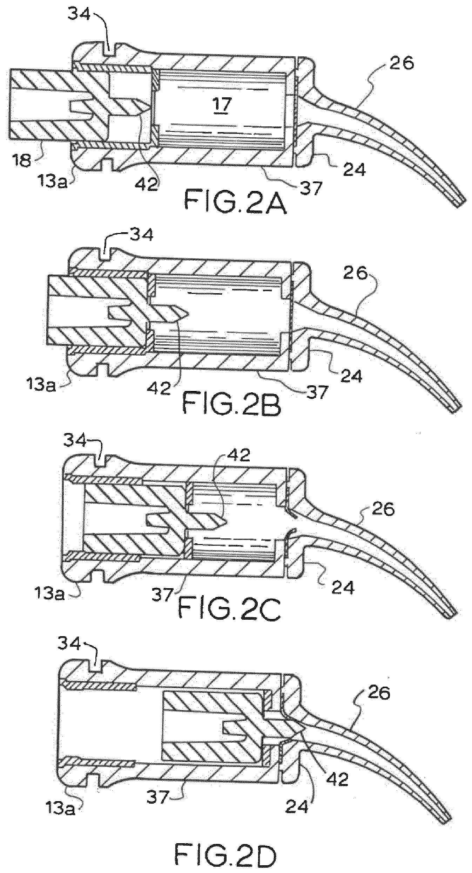

In relation to **FIG. 2****,** of the accompanying drawings there is shown the container **10 in** an activated condition. This is achieved by means of the plunger **18** being depressed. This action causes the plunger **18** to be moved so that initially the sharp protrusion **42** engages with and then pierces the weakened section **38** of the front portion **36.** The plunger then moves forward until the front face **41** thereof engages with the front portion **36** and displaces the liquid hydraulically. The liquid is thus forced through a small hole in the weakened section **38** around the protrusion **42** formed by the piercing action into the main chamber **17** of the body **12** by the front face **41.** The container **10** may then be placed into a known vibrating mixing device. The liquid and the powder are admixed and thereby form a paste in the chamber **17.**

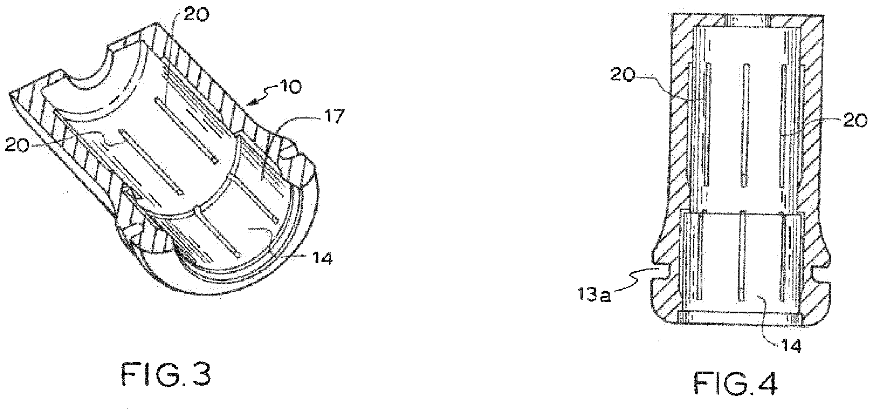

Referring to **FIG. 3****,** there is shown the container **10** after the plunger **18** has been depressed and the liquid and the powder have been mixed to form a paste. The main chamber **17** of the body **12** now contains the paste. The front portion **36** of the liquid receptacle **14** has broken away from the remainder of the liquid receptacle **14.**

The plunger **18** forces the front portion **36** of the liquid receptacle **14** along the main chamber 17, where the front portion **36** of the liquid receptacle **14** acts as a seal and prevents paste from travelling rearwardly. Means such as slots **20** located in the main body internal wall **11** may be provided to act as vent means for entrapped air to escape from the powder

As the plunger **18** is displaced forwardly hydraulic pressure on the paste bursts the membrane **22,** allowing fluid communication between the main chamber **17** and the nozzle **26** and subsequent dispensing of the paste to a desired location.

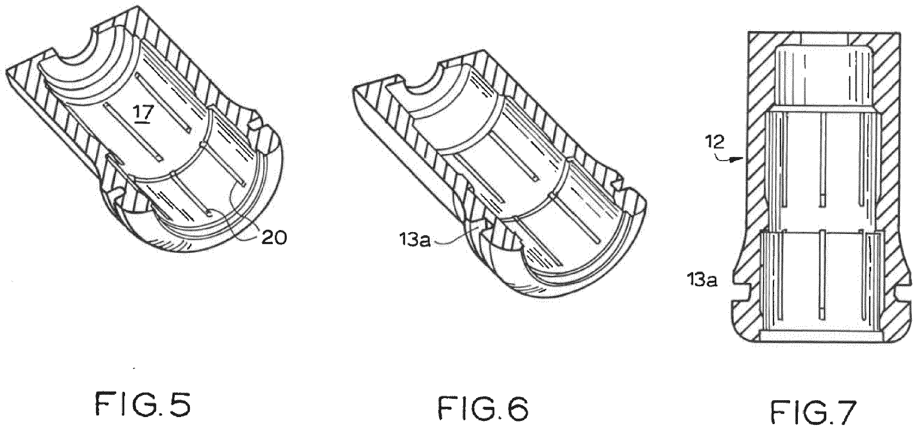

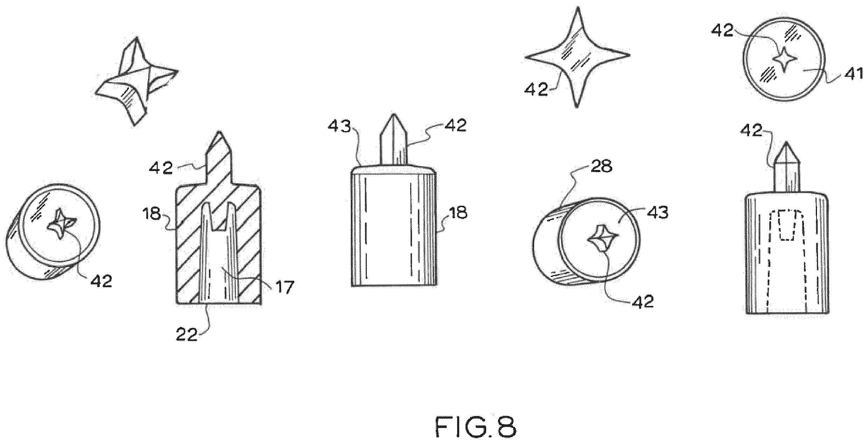

In figures 5 to 7 of the accompanying drawings, there are shown variations of the container **10 in** cross sections. Further, in figure 8 of the accompanying drawings the projections **42** which have various configurations which may be star shaped in cross sections or the like.

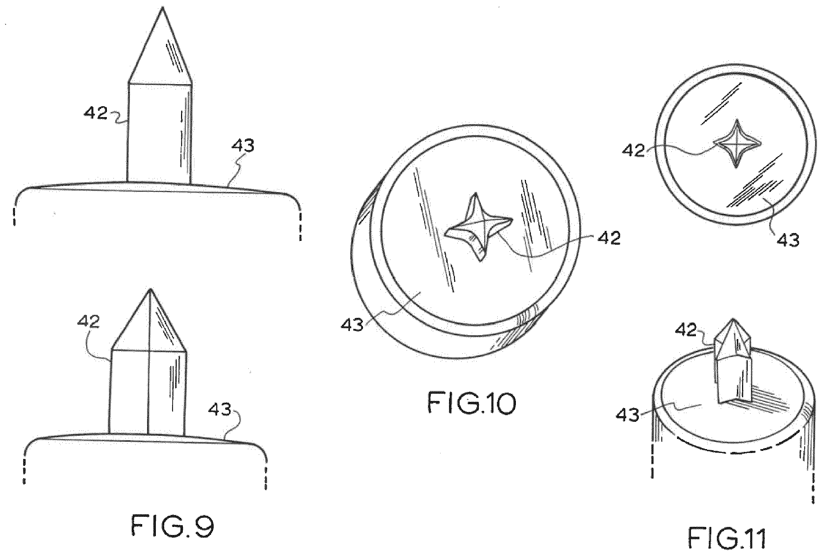

In figure 9, 10 and 11 there are shown projections **42,** which are welded to the plunger **41.**

Modifications and variations as would be apparent to a skilled addressee are deemed to be within the scope of the present invention.

## Claims

1. A mixing and dispensing container for mixing and dispensing dental materials comprising:
a plunger;
an open-ended liquid receptacle adapted to receive the plunger; and
a main body with a proximal end, a distal end, a chamber open at the proximal end and an aperture in the distal end;
wherein the chamber is adapted to receive the liquid receptacle; and
wherein the dental capsule mixes various components of the dental materials and forms a dental paste for dispensing.

2. The mixing and dispensing container of claim 1 wherein, a liquid is housed within the liquid receptacle and a powder is housed within the chamber.

3. The mixing and dispensing container of claims 1 or 2 wherein, the liquid receptacle incorporates a centrally weakened portion.

4. The mixing and dispensing container of claim 3 wherein, the plunger has a forwardly projecting protrusion adapted to break the centrally weakened portion of the liquid receptacle.

5. The mixing and dispensing container of claim 4 wherein, the plunger is in engagement with the liquid receptacle such that upon the plunger being depressed the liquid in the receptacle is pushed into the chamber.

6. The mixing and dispensing container of claim 5 wherein, further depression of the plunger results in a front portion of the liquid receptacle is broken away by depression of the plunger so as to push mixture of liquid and powder in the chamber through the aperture.

7. The mixing and dispensing container of claim 6 wherein, the dental capsule further comprises internal features that provide tactile feedback to an operator as to how far the plunger has been depressed, or how far the liquid receptacle has moved.

8. The mixing and dispensing container of claims 6 to 7 wherein, the dental capsule, or a portion thereof, is made from a transparent material allowing for an operator to view the mixing of liquids and/or powder, and/or how far the plunger has been depressed.

9. The mixing and dispensing container of any of the previous claims wherein, the dental capsule further comprises a nozzle connected to the aperture at the distal end of the main body.

10. The mixing and dispensing container of any of the previous claims wherein, the dental capsule further comprises, a frangible membrane covering the aperture.

11. The mixing and dispensing container of any of the previous claims wherein, the chamber incorporates vent means for allowing entrapped air to escape from the mixed paste during extrusion.

12. The mixing and dispensing container of claims 3 to 11 wherein, the central weakened portion of the liquid receptacle has a thickness of less than 0.05 mm.

13. The mixing and dispensing container of claim 12 wherein, the central weakened portion of the liquid receptacle has a thickness of less than 0.03mm.

14. The mixing and dispensing container of claims 3 to 13 wherein, the central weakened portion of the liquid receptacle is formed of a unitary sheet of material that is integral to the liquid receptacle moulded part.

15. The mixing and dispensing container of claims 10 to 14 wherein, the frangible membrane has a thickness of less than 0.02 mm.

16. The mixing and dispensing container of claims 10 to 15 wherein, the frangible membrane is formed of a unitary sheet of material.

17. The mixing and dispensing container of any of the previous claims wherein, the dental capsule further comprises, a seal means located on an external surface of the plunger.
